# EUROPÄISCHE PATENTSCHRIFT

(11) **EP 1 114 741 B1**
(45) Veröffentlichungstag und Bekanntmachung des Hinweises auf die Patenterteilung: **21.06.2006**
(21) Anmeldenummer: 00127634.4
(22) Anmeldetag: 16.12.2000
(51) Int. Cl.: B60G 17/00, A01D 75/28, B60G 17/015, B60K 17/04

(54) **Einrichtung zum hangabhängigen Verstellen der Laufräder eines Arbeitsfahrzeuges**
Device for inclination-dependent adjustment of the running wheels of a work vehicle
Dispositif pour le réglage de roues de roulement d'un véhicule de travail dépendant de la pente

(30) Priorität: 04.01.2000 DE 10000144
(43) Veröffentlichungstag der Anmeldung: 11.07.2001
(73) Patentinhaber: CLAAS Selbstfahrende Erntemaschinen GmbH, 33428 Harsewinkel (DE)
(72) Erfinder: Weigelt, Horst, Dr., 33332 Gütersloh (DE)

(56) Entgegenhaltungen:
- EP-A- 0 010 019
- DE-B- 1 087 465
- DE-C- 696 526
- US-A- 5 865 444
- TEBRUEGGE F: "HANGMAEHDRESCHER AUS TECHNISCHER UND OEKONOMISCHER SICHT" LANDTECHNIK, VERLAG EDUARD F.BECKMANN KG. LEHRTE, HANNOVER, DE, Bd. 34, Nr. 6, 1. Juni 1979 (1979-06-01), Seiten 282-286, XP000577031 ISSN: 0023-8082

## Beschreibung

Die Erfindung bezieht sich auf eine Einrichtung zum hangabhängigen Verstellen der Laufräder eines Arbeitsfahrzeuges, insbesondere für selbstfahrende Erntemaschinen, wie Mähdrescher oder sonstige Land-, Bau- und Forstmaschinen nach dem Oberbegriff des Patentanspruches 1.

Um auch beim Einsatz dieser Fahrzeuge in Hanglagen eine waagerechte Lage der maschineninternen Arbeitsvorrichtungen zu erreichen, sind bereits verschiedene, zumeist hydraulisch betätigte Verstelleinrichtungen für die schwenkbar angeordneten Laufräder bekannt.

Die EP1-0 010 019 offenbart ein- oder mehrachsigen Anhänger mit einer Einrichtung zum Verstellen des Abstands der Räder zum Anhängeraufbau. Die Räder sind jeweils mit einem Radträger verbunden, der um eine parallel zur Drehachse der Räder ver laufende Achse verschwenkkbar ist. Der Antrieb zum Verschwenken der Radträger erfolgt über ein Schneckengetriebe, wobei die Schneckenräder über die Torsionsfedem mit den Radträgern verbunden sind.

Die DE 696 526 offenbart ein Fahrgestell für Kraftfahrzeuge oder Kraftfahrzeuganhänger. Die Räder des Fahrzeugs sind an Schwingarmen gelagert, deren Lage bezüglich des Fahrgestellrahmens veränderbar ist. Hierzu sind die Schwingarme jeweils an das Ende von Querrohren des Fahrzeugrahmens angeordnet und mit einer Drehstabfeder verbunden. Die Drehstabfeder wird über ein Schneckengetriebe rotierend angetrieben, welche ihrerseits den mit ihr verbundenen Schwingarm antreibt.

In der EP 0 698 338 B1 ist eine Erntemaschine mit Seitenhangausgleich beschrieben, bei der eine Schwenkvorrichtung mit einem zweischenkligen Schwenkarm vorgesehen ist, dessen erster Schenkel von einem als Büchse ausgebildeten Rahmen schwenkbar getragen wird und dessen zweiter Schenkel mit dem Radgetriebe des Laufrades verbunden ist. Zwischen dem Schwenkarm und dem Rahmen ist eine Stellvorrichtung angeordnet, die über einen doppelt wirkenden Hydraulikzylinder betätigt wird. Die Stellvorrichtung erstreckt sich im Wesentlichen in horizontaler Richtung unterhalb der Schwenkachse des ersten Schenkels. Der Hydraulikzylinder wird entsprechend der jeweiligen Hanglage von einer Steuervorrichtung beaufschlagt. Mittels der Stellvorrichtung ist das Radgetriebe mit dem damit verbundenen Laufrad in vertikaler Richtung schwenkbar, so dass die Erntemaschine innerhalb bestimmter Grenzen in einer waagerechten Lage gehalten werden kann. Nachteilig bei dieser Ausführung ist die kostenaufwendige Bauweise sowie der erforderliche große Bauraumbedarf im Fahrwerksbereich durch die weit ausladende hydraulische Stellvorrichtung. Ferner sind die Verstelleinrichtungen, durch ihre Unterbringung in Nähe der Laufräder extrem großen Schmutzbelastungen ausgesetzt, was insbesondere bei hydraulischen Stelleinrichtungen dazu führt, dass die Kolbenstangengleitflächen sowie sonstige Dreh- und Schwenkverbindungen in Mitleidenschaft gezogen werden, wenn keine aufwendigen Schutzeinrichtungen zusätzlich angebracht werden.

Desweiteren ist aus der EP 0 864 250 A1 eine Antriebsachse für Mähdrescher mit einem Hangausgleich bekannt. Hierbei sind an den Radträgern der Laufräder Hohlwellenstücke befestigt, die in Lagern des Achstragkörpers geführt sind. Zwischen einer Konsole am Achstragkörper und einem Lagerzapfen am Radgetriebe ist ein Hydraulikzylinder angeordnet. Durch die Bewegung der Kolbenstangen der Hydraulikzylinder werden die Radgetriebe mit dem daran befestigten Laufrädern um die Längsachse der Hohlwellenstücke in den Lagern je nach Neigung des Mähdreschers gegensinnig geschwenkt und bewirken so dessen horizontale Lage, soweit es die kinematischen Verhältnisse der Vorrichtung zulassen. Auch bei dieser Ausführung treten die gleichen Nachteile wie bei der bereits genannten Ausgleichseinrichtung nach der EP 0 698 338 B1 auf.

Der Erfindung liegt die Aufgabe zugrunde, die sich aus dem bekannten Stand der Technik ergebenden Nachteile möglichst zu vermeiden. Weiterhin sollen hosfen günstig Ausführungsvarianten (mit/ohne Verstelleinrichtung) darstellban sein.

Erfindungsgemäß wird diese Aufgabe durch die im Patentanspruch 1 genannten Merkmale gelöst. Weitere vorteilhafte Ausführungen des Erfindungsgegenstandes ergeben sich aus den nachgeordneten Ansprüchen.

Durch die kompakte und bauraumsparende Ausführung der Verstelleinrichtung treten im Vergleich zu herkömmlichen Einrichtungen keine Behinderungen und Einschränkungen im Fahrwerks- beziehungsweise Dreschwerksbereich auf, so dass auch keine Überschreitung der im Straßenverkehr zulässigen Transportbreite sowie keine Verringerung der Maschinenkapazität durch eine eingeschränkte Breite der Arbeitsvorrichtungen auftritt. Infolge der Vergrößerung des möglichen Schwenkbereiches der Laufräder werden die Einsatzgrenzen der Maschinen auf größere Hangneigungen erweitert. Desweiteren ergibt sich durch die einfache kompaktere Bauweise ein geringerer Herstellungsaufwand sowie eine erhöhte funktionelle Zuverlässigkeit auch bei auftretenden hohen Belastungen unter starker Schmutzeinwirkung. Beim Einsatz mehrerer Schnecken am Umfang des Schneckenrades kann die Belastung der einzelnen, tragenden Bauteile sowie deren Verschleiß erheblich verringert werden.

Die Erfindung wird nachstehend an einem Ausführungsbeispiel näher erläutert. In der zugehörigen Zeichnung zeigen
- Figur 1: den vorderen Bereich eines Mähdreschers mit der Verstelleinrichtung für die Laufräder;
- Figur 2: den Schnitt II - II nach Figur 1;
- Figur 3: den Schnitt III - III nach Figur 2.
- Figur 4: einen Ausschnitt aus der Figur 3 in abgewandelter Form

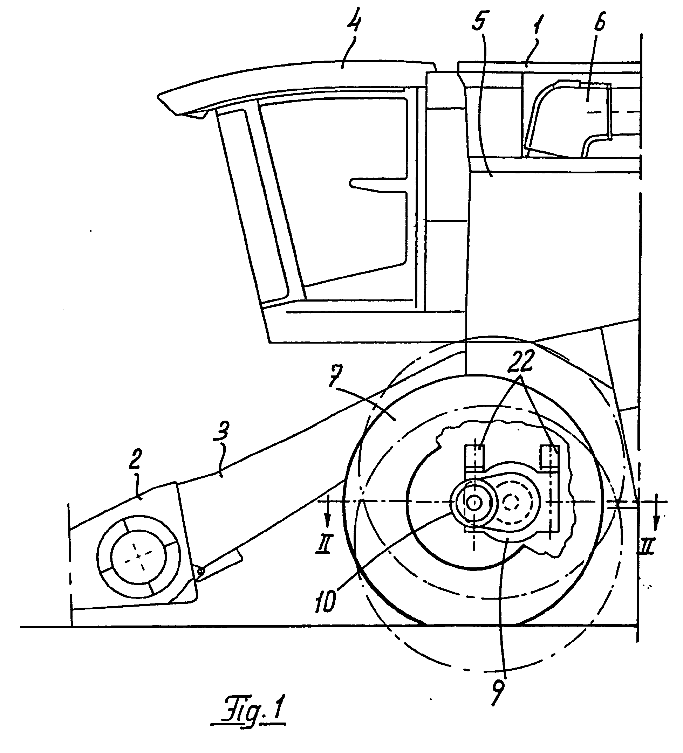

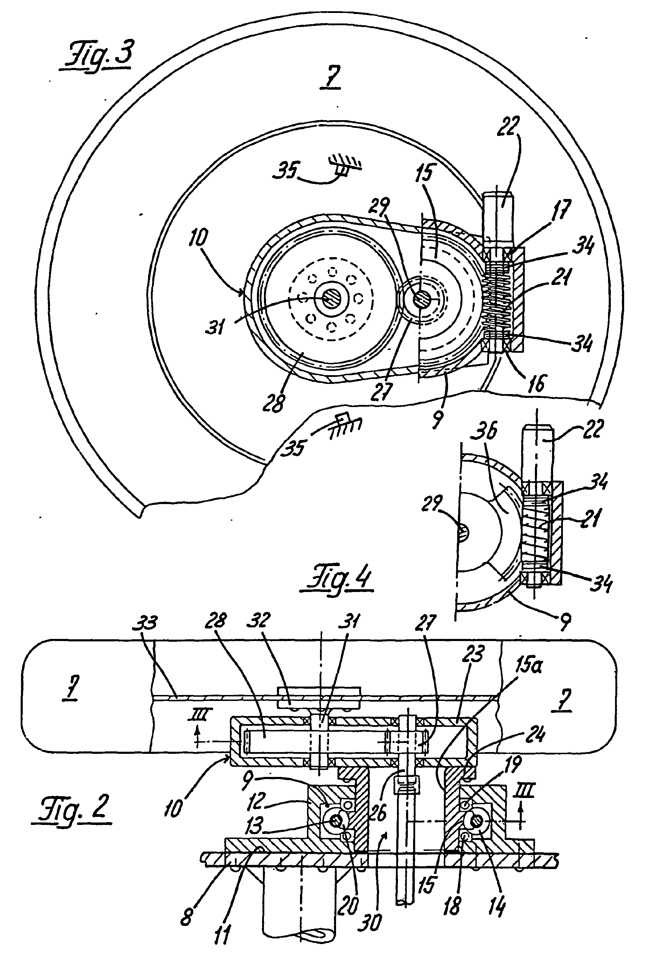

Der in der Figur 1 schematisch dargestellte vordere Bereich eines selbstfahrenden Mähdreschers 1 ist in bekannter Weise, unter anderem mit einem Schneidwerk 2, einem Einzugskanal 3, einer Fahrerkabine 4 und einem Korntank 5 mit Abtankschnecke 6 ausgerüstet. Die weiterhin vorhandene Dresch- und Reinigungseinrichtung sowie die zugeordneten Antriebsmittel sind in der Zeichnung nicht dargestellt. Um auch beim Ernteeinsatz in Hanglagen eine optimale Auslastung der Maschinenkapazität mit geringen Körnerverlusten zu erreichen, ist eine möglichst waagerechte Lage der Zuführ-, Dresch- und Reinigungseinrichtung erforderlich. Zu diesem Zweck sind die vorderen angetriebenen Laufräder 7 in vertikaler Richtung schwenkbar angeordnet, so dass sich der Maschinenrahmen 8 des Mähdreschers 1 unabhängig von der jeweiligen Hanglage stets in einer waagerechten Lage befindet. Das Schwenken der Laufräder 7 erfolgt dabei über ein Schneckengetriebe 9, das zwischen dem Maschinenrahmen 8 und einem Radträger 10 des Laufrades 7 angeordnet ist. Zwischen dem Maschinenrahmen 8 und dem feststehenden Getriebegehäuse 12 können stoßdämpfende Elemente 34 angebracht sein. Der Antriebsverlauf für die Übertragung der Schwenkbewegung vom Schneckengetriebe 9 zum Laufrad 7 ist in den Figuren 2 und 3 dargestellt. An einer seitlichen Befestigungsfläche 11 des Maschinenrahmens 8 ist im Bereich gegenüber dem Laufrad 7 das Getriebegehäuse 12 des Schneckengetriebes 9 lösbar befestigt. In dem Getriebegehäuse 12 sind zwei, in diesem Fall vertikal verlaufende Schnecken 13, 14 und ein Schneckenrad 15 mit einer integrierten Hülse 15a drehbar angeordnet. Die Schnecken 13, 14 sind an ihren beiden Enden gelagert. Die zugehörigen Lager 16, 17 sind an der Wandung des Getriebegehäuses 12 angebracht. Das Schneckenrad 15 ist am Getriebegehäuse 12 durch zwei hochbelastbare Momentenlager 18, 19, die jeweils seitlich unmittelbar neben der Verzahnung 20 des Schneckenrades 15 angeordnet sind, drehbar gelagert. Die Momentenlager 18, 19 nehmen jeweils Axial- und Radialkräfte als auch Momente auf. Die zylindrischen Schnecken 13, 14 stehen mit ihren Schneckenzähnen 21 mit der Verzahnung 20 des Schneckenrades 15 in Eingriff und bewegen dieses entsprechend der jeweiligen Drehrichtung. Der Antrieb jeder einzelnen Schnecke 13, 14 erfolgt beispielsweise über einen drehrichtungsumkehrbaren hydraulischen oder elektrischen Antriebsmotor 22, der mit dem Wellenkern der Schnecke 13, 14 verbunden ist. Entsprechend der Größe des zu übertragenden Drehmomentes sind eine oder mehrere angetriebene Schnecken 13, 14 am Umfang des Schneckenrades 15 angeordnet, auf das sie gemeinsam einwirken. Die Verwendung mehrerer Schnecken 13, 14 verringert die Spitzenlasten, die auf die Schnecken 13, 14 und die Zähne des Schneckenrades 15 einwirken. Dadurch können die belasteten Teile kleiner und schwächer ausgelegt werden, und der Verschleiß in den hochbelasteten Zonen ist geringer. Bei Erntemaschinen leichterer Bauart ist es ausreichend, das Schneckenrad 15 mit nur einer Schnecke anzutreiben. Das Schneckenrad 15 kann dann alternativ durch ein sogenanntes Schneckenradsegment 36 (Fig.4) ersetzt werden. Um dennoch auftretende Stoßbelastungen auf das Getriebe 9 aufzufangen, ist eine jede der Schnecken 13, 14 beidendig ihrer Schneckenwindungen 21 über stoßdämpfende Elemente 34 gegenüber dem Getriebegehäuse 12 abgestützt. Die Drehbewegung des Schneckenrades 15 wird auf das Gehäuse 23 des Radträgers 10 übertragen. Hierzu ist zwischen einem Flansch 24 der Hülse 15a des Schneckenrades 15 und dem Gehäuse 23 des Radträger 10 eine lösbare Schraubverbindung vorhanden. Der Radträger 10 enthält zwei Stirnräder 27, 28, die eine Drehzahluntersetzung zwischen einer nicht dargestellten Antriebsquelle und dem Laufrad 7 ermöglichen. Die Antriebsquelle ist über eine Welle 29, die durch den Innenraum 30 der Hülse 15a verläuft, mit der Eingangswelle 26 des Radträgers 10 verbunden. Die Eingangswelle 26 des Radträger 10 verläuft parallelachsig zu dessen Ausgangswelle 31. Über die Ausgangswelle 31 und einen Wellenflansch 32 ist die Radscheibe 33 des Laufrades 7 mit dem Radträger 10 verbunden. Entsprechend der jeweiligen Drehrichtung des Schneckenrades 15 wird der Radträger 10 mit dem Laufrad 7 in Bezug auf den Maschinenrahmen 8 jeweils nach der vorhandenen Hangneigung nach oben oder unten um die als Schwenkachse dienende Eingangswelle 26 des Radträgers 10 verschwenkt. In der Figur 1 sind verschiedene Schwenkstellungen der Laufräder 7 durch Strich-Punkt-Linien dargestellt.

Der Schwenkbereich des Radträgers 10 ist durch Endanschläge beziehungsweise Endschalter 35 begrenzt, die auf die Verstelleinrichtung einwirken. Die Stelleinrichtung wird vorzugsweise über einen Hydraulikschaltkreis betätigt. Von einem Regelkreis wird die seitliche Neigung des Mähdreschers 1 erfaßt und daraus ein Ausgangssignal gebildet, das durch die jeweils erforderliche Betätigung des Schneckengetriebes 9 den Hangausgleich ermöglicht und dadurch den Mähdrescher 1 in der waagerechten Lage hält.

### Bezugszeichenliste

- 1 -: Mähdrescher
- 2 -: Schneidwerk
- 3 -: Einzugskanal
- 4 -: Fahrerkabine
- 5 -: Korntank
- 6 -: Abtankschnecke
- 7 -: Laufräder
- 8 -: Maschinenrahmen
- 9 -: Schneckengetriebe
- 10 -: Radträger
- 11-: Befestigungsfläche
- 12 -: Getriebegehäuse
- 13 -: Schnecke
- 14 -: Schnecke
- 15 -: Schneckenrad
- 15a -: Hülse
- 16 -: Lager
- 17 -: Lager
- 18 -: Momentenlager
- 19 -: Momentenlager
- 20 -: Verzahnung
- 21 -: Schneckenzähne
- 22 -: Wellenansatz
- 23 -: Gehäuse
- 24 -: Flansch
- 25 -: Drehachse
- 26 -: Eingangswelle
- 27 -: Stirnräder
- 28 -: Stirnräder
- 29 -: Welle
- 30 -: Innenraum
- 31 -: Ausgangswelle
- 32 -: Wellenflansch
- 33 -: Radscheibe
- 34 -: stoßdämpfende Elemente
- 35 -: Endanschläge; Schalter
- 36: Schneckenradsegment

## Patentansprüche

1. Einrichtung zum hangabhängigen Einstellen angetriebener Laufräder auf unterschiedliche Laufebenen am Hang bei Arbeitsfahrzeugen, insbesondere selbstfahrenden Erntemaschinen, wie Mähdreschern, wobei jedes einzelne Rad über einen vertikal verschwenkbaren Radträger, unter Zwischenschaltung einer Verstelleinrichtung mit dem Maschinenrahmen so verbunden ist ,dass die Drehachse des Laufrades und die Schwenkachse des Radträgers exzentrisch zueinander stehen,
**dadurch gekennzeichnet,**
**dass** dieVerstelleinrichtung als ein Schneckengetriebe (9) ausgebildet ist, wobei das separat ausgeführte feststehende Getriebegehäuse (12) des Schneckengetriebes (9) mit dem Maschinenrahmen (8) und das drehbare Schneckenrad (15) des Schneckengetriebes (9) mit dem Radträger (10) direkt oder indirekt verbunden ist.

2. Einrichtung nach Anspruch 1,
**dadurch gekennzeichnet,**
**dass** an Stelle eines Schneckenrades (15) ein Schneckenradsegment (36) Anwendung findet.

3. Einrichtung nach Anspruch 1,
**dadurch gekennzeichnet,**
**dass** das Schneckenrad (15) durch beidseitig von der Verzahnung (20) angeordnete Momentenlager (18, 19) im Getriebegehäuse (12) drehbar gelagert ist.

4. Einrichtung nach dem Ansprüchen 1 bis 3
**dadurch gekennzeichnet,**
**dass** das Schneckenrad (15) beziehungsweise das Schneckenradsegment (34) mit einer integrierten Hülse 15a und einem Flansch (24) versehen ist.

5. Einrichtung nach den Ansprüchen 1, 3 bis 4,
**dadurch gekennzeichnet,**
**dass** im Schneckengetriebe (9) eine oder mehrere Schnecken (13, 14) angeordnet sind, die mit dem Schneckenrad (15) gemeinsam in Eingriff stehen.

6. Einrichtung nach einem oder mehreren der Ansprüche 1 bis 5
**dadurch gekennzeichnet,**
**dass** die Schnecken (13, 14) des Schneckengetriebes (9) von hydraulischen oder elektrischen drehrichtungsumkehrbaren Antriebsmotor angetrieben werden.

7. Einrichtung nach einem oder mehreren der Ansprüche 1 bis 6,
**dadurch gekennzeichnet,**
**dass** der Schwenkbereich des Radträgers (10) durch Endanschläge beziehungsweise Endschalter (35) begrenzt ist.

8. Einrichtung nach einem oder mehreren der Ansprüche 1 bis 7
**dadurch gekennzeichnet,**
**dass** zwischen dem Radträger (10) mit seiner Drehlagerung (15, 15a) und dem Getriebegehäuse (12) stoßdämpfende Mittel (34) angeordnet sind.

## Claims

1. A device for slope-dependent adjustment of driven wheels to differing travel planes on a slope in the case of working vehicles, in particular self-propelled harvesters such as combine harvesters, wherein each individual wheel is connected to the machine frame by way of a vertically pivotable wheel carrier with the interposition of an adjusting device in such a way that the axis of rotation of the wheel and the pivot axis of the wheel carrier are in mutually eccentric relationship,
**characterised in that**
the adjusting device is in the form of a worm transmission (9), wherein the separately provided, fixed transmission housing (12) of the worm transmission (9) is directly or directly connected to the machine frame (8) and the rotatable worm wheel (15) of the worm transmission (9) is directly or indirectly connected to the wheel carrier (10).

2. A device according to claim 1 **characterised in that** a worm wheel segment (36) is used in place of a worm wheel (15).

3. A device according to claim 1 **characterised in that** the worm wheel (15) is supported rotatably in the transmission housing (12) by moment bearings (18, 19) arranged on both sides of the tooth configuration (20).

4. A device according to claims 1 to 3 **characterised in that** the worm wheel (15) or the worm wheel segment (34) is provided with an integrated sleeve (15a) and a flange (24).

5. A device according to claims 1, 3 to 4 **characterised in that** arranged in the worm transmission (9) are one or more worms (13, 14) which are in engagement jointly with the worm wheel (15).

6. A device according to one or more of claims 1 to 5 **characterised in that** the worms (13, 14) of the worm transmission (9) are driven by hydraulic or electrical drive motors which are reversible in their direction of rotation.

7. A device according to one or more of claims 1 to 6 **characterised in that** the pivot range of the wheel carrier (10) is limited by limit abutments or limit switches (35).

8. A device according to one or more of claims 1 to 7 **characterised in that** shock-absorbing means (34) are arranged between the wheel carrier (10) with its rotary mounting arrangement (15, 15a) and the transmission housing (12).

## Revendications

1. Dispositif destiné au réglage, en fonction de la pente, de roues de roulement motrices évoluant sur des plans de roulement différents dans une pente, dans des véhicules de travail, en particulier des machines de récolte automotrices telles que des moissonneuses-batteuses, dispositif dans lequel chacune des roues est reliée au châssis de la machine par un support de roue pouvant pivoter verticalement, avec interposition d'un dispositif de réglage, de sorte que l'axe de rotation de la roue de roulement et l'axe de pivotement du support de roue sont excentriques l'un par rapport à l'autre, **caractérisé en ce que** le dispositif de réglage prend la forme d'un engrenage à vis sans fin (9) dans lequel le carter de transmission (12) fixe et distinct de l'engrenage à vis sans fin ' (9) est lié directement ou indirectement au châssis de machine (8), et la roue tangente (15) mobile de l'engrenage à vis sans fin (9) l'est au support de roue (10).

2. Dispositif selon la revendication 1, **caractérisé en ce que** l'on utilise à la place de la roue tangente (15) un segment de roue tangente (36).

3. Dispositif selon la revendication 1, **caractérisé en ce que** la roue tangente (15) est montée pivotante dans le carter de transmission (12) par l'intermédiaire de paliers d'équilibrage des moments (18, 19) disposés de part et d'autre de la denture (20).

4. Dispositif selon les revendications 1 à 3, **caractérisé en ce que** la roue tangente (15) ou le segment de roue tangente (34) est doté d'une douille intégrée (15a) et d'une bride (24).

5. Dispositif selon les revendications 1 et 3 à 4, **caractérisé en ce que** l'engrenage à vis sans fin (9) comporte une ou plusieurs vis (13, 14) qui sont engrenées ensemble avec la roue tangente (15).

6. Dispositif selon une ou plusieurs des revendications 1 à 5, **caractérisé en ce que** les vis (13, 14) de l'engrenage à vis sans fin (9) sont entraînées par des moteurs d'entraînement hydrauliques ou électriques dont le sens de rotation peut être inversé.

7. Dispositif selon une ou plusieurs des revendications 1 à 6, **caractérisé en ce que** la plage de pivotement du support de roue (10) est limitée par des butées de fin de course, respectivement par des rupteurs de fin de course (35).

8. Dispositif selon une ou plusieurs des revendications 1 à 7, **caractérisé en ce que** des moyens d'amortissement des impacts (34) sont disposés entre le support de roue (10) avec ses paliers (15, 15a) et le carter de transmission (12).
